# EUROPEAN PATENT APPLICATION

(11) **EP 2 559 397 A1**
(43) Date of publication of application: **20.02.2013**
(21) Application number: 10849910.4
(22) Date of filing: 15.11.2010
(51) Int. Cl.: A61C 5/02, A61C 19/06

(54) **ULTRASONIC DENTAL TIP FOR REMOVING A POST**

(30) Priority: 16.04.2010 KR 20100035073
(71) Applicant: B&L Biotech Co., Ltd., 1136-1 Sanbon-dong Gunpo-si, Gyeonggi-do 435-040 (KR)
(72) Inventor: LEE, In Hwan, Gunpo-si Gyeonggi-do 435-040 (KR)
(74) Representative: Tischner, Oliver
(86) International application number: PCT/KR2010/008027
(87) International publication number: WO 2011/129506

(57) **Abstract**

A dental ultrasonic tip for removing a post by continuously transmitting ultrasonic energy to the post through continuous contact with the post is provided. The dental ultrasonic tip for removing a post may include a tip body portion, and a post receiving portion integrally formed with a leading end of the tip body portion and configured to include a recess depressed into a predetermined space shape. When a post mounted in a root canal is to be removed, the post is inserted in the recess while coming into contact with an inner surface of the recess. According to the foregoing structure, ultrasonic energy may be continuously transmitted to the post and the post may be efficiently removed.

## Description

### Technical Field

The present invention relates to a dental ultrasonic tip for removing a post, and more particularly, to a dental ultrasonic tip for removing a post by continuously transmitting ultrasonic energy to the post through continuous contact with the post.

### Background Art

A dental ultrasonic tip is used to remove tartar and other deposits from teeth by vibrating a tip using ultrasonic vibration energy or to perform a root canal surgery. In addition, the dental ultrasonic tip is widely applied to various dental treatments such as an implant surgery, a periodontal surgery, an oral cavity surgery, a maxillofacial surgery, and the like. Furthermore, the dental ultrasonic tip may also be used to minimize damage of soft tissues such as nerves, blood vessels, muscles, and the like, during bone orthopedic surgeries such as osteotomy and drilling, saucerization that thinly removes a cortical bone, and all oral cavity surgeries including oscillation and reciprocation by a power saw for an aesthetic surgery and bone rasping by a grinding tool.

A post refers to an intra-root device mounted in a space defined in a root canal to maintain a core and protect remaining dental tissue after a root canal treatment. That is, the post is used as an abutment to recover teeth after the root canal treatment is performed.

However, occasionally, the post needs to be removed from the root canal due to various reasons, for example, occurrence of an inflammation. In this case, an ultrasonic tip may be used to remove the post.

Generally, a dental ultrasonic tip has a tapered cross section toward a leading end. The leading end may have a ball shape or pointed shape. Therefore, conventionally, the leading end of the dental ultrasonic tip used to discontinuously contact an outer surface of the post by rotating by 360°, thereby transmitting ultrasonic energy to the post.

That is, according to the conventional method, the post used to be removed by breaking cement around the post by the ultrasonic energy through repetition of the discontinuous contact of the dental ultrasonic tip.

However, the conventional method is inconvenient for a doctor since the doctor needs to repeat contacting and separating the dental ultrasonic tip with respect to the post.

Accordingly, there is a desire for a new dental ultrasonic tip for removing a post more efficiently.

### Disclosure of Invention

### Technical Goals

An aspect of the present invention provides a dental ultrasonic tip for removing a post by continuously transmitting ultrasonic waves to the post.

Another aspect of the present invention provides a dental ultrasonic tip for removing a post, which is capable of transmitting sufficient ultrasonic energy by configuring a leading end of the dental ultrasonic tip to surround an outer surface of the post, so that the post is removed through only one time of contact.

Still another aspect of the present invention provides a dental ultrasonic tip for removing a post mounted in a root canal quickly and conveniently.

### Technical solutions

According to an aspect of the present invention, there is provided a dental ultrasonic tip for removing a post, the dental ultrasonic tip including a tip body portion, and a post receiving portion integrally formed with a leading end of the tip body portion and configured to include a recess depressed into a predetermined space shape, wherein, when a post mounted in a root canal is to be removed, the post is inserted in the recess while coming into contact with an inner surface of the recess.

The recess may be tapered in a depth direction of the recess.

The recess may have a flattened-U-shape cross section with one open side.

The recess may be tapered in a width direction of the recess.

### Effects of Invention

According to embodiments of the present invention, a post may be efficiently removed since ultrasonic waves are continuously transmitted to the post.

Additionally, according to embodiments of the present invention, since a leading end of the dental ultrasonic tip surrounds an outer surface of the post, ultrasonic energy may be transmitted to the outer surface of the post in various directions by only one time of contact. Therefore, sufficient ultrasonic energy capable of removing the post may be transmitted to the post with a small operation.

Additionally, according to embodiments of the present invention, the dental ultrasonic tip may transmit ultrasonic waves to the post in continuous contact with the post without having to repeat contact and separation with respect to the outer surface of the post by rotating by 360°. Therefore, the post may be removed quickly and efficiently.

Additionally, according to embodiments of the present invention, since a post removal time is reduced, inconvenience of a patient and a surgery time may be reduced.

### Brief Description of Drawings

FIG. 1 is a perspective view illustrating a dental ultrasonic tip for removing a post, according to an embodiment of the present invention;
FIG. 2 is a diagram illustrating a recess of a post receiving portion of the dental ultrasonic tip for removing a post, according to the embodiment of the present invention;
FIGS. 3 to 6 are diagrams illustrating a shape of the recess in further detail;
FIG. 7 is a diagram illustrating the dental ultrasonic tip for removing a post in contact with a post, according to the present invention; and
FIGS. 8 and 9 are diagrams illustrating the post received in the recess in contact with the recess.

### Best Mode for Carrying Out the Invention

Reference will now be made in detail to exemplary embodiments of the present invention, examples of which are illustrated in the accompanying drawings, wherein like reference numerals refer to the like elements throughout.

A dental ultrasonic tip 1 for removing a post performs various dental oral cavity surgeries by vibrating a tip using ultrasonic vibration energy. According to the exemplary embodiments, the dental ultrasonic tip 1 for removing a post will be described as an ultrasonic tip used for removing a post functioning as an abutment for recovering teeth especially in a root canal surgery out of various surgeries.

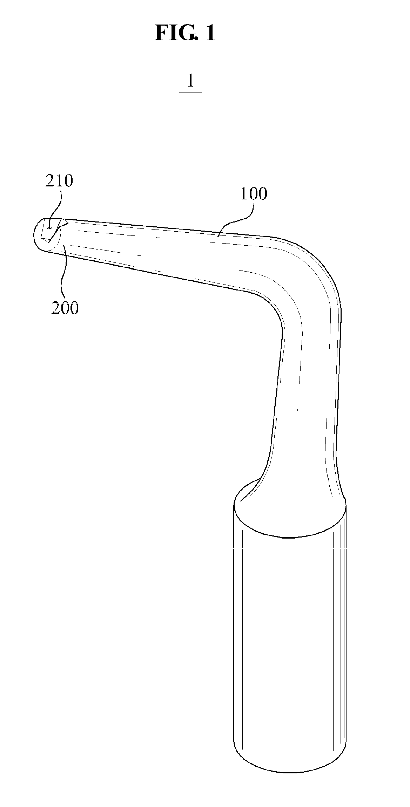

The dental ultrasonic tip 1 may include a tip body portion 100, and a post receiving portion 200. The structure will be described in detail with reference to FIG. 1.

FIG. 1 is a perspective view illustrating the dental ultrasonic tip 1 for removing a post, according to an embodiment of the present invention.

The tip body portion 100 may have a diameter reducing toward a leading end although not limited to the present embodiment. Depending on cases, the tip body portion 100 may have a polygonal cross section tapered toward the leading end.

The post receiving portion 200 is integrally formed with the leading end of the tip body portion 100. However, the post receiving portion 200 may be modularized to be replaceable.

A recess 210 may be formed at an end of the post receiving portion 200, being depressed into a predetermined space shape. Therefore, when removing a post mounted in a root canal, the post may be inserted in the recess 210 and brought into contact with an inner surface of the recess 210. Ultrasonic energy may be transmitted through the contact, which will be described in detail later.

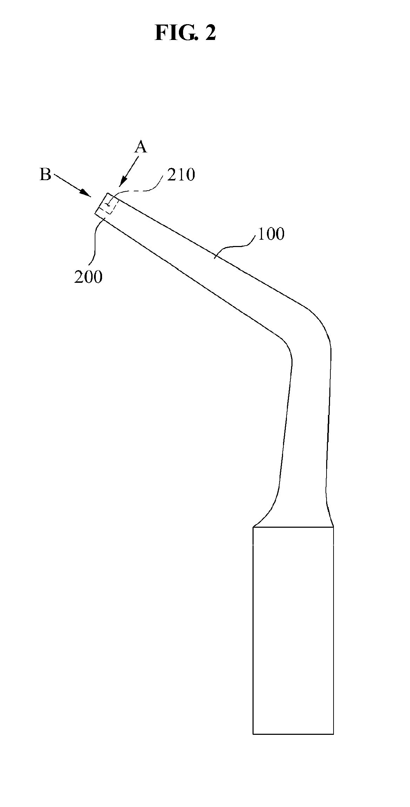

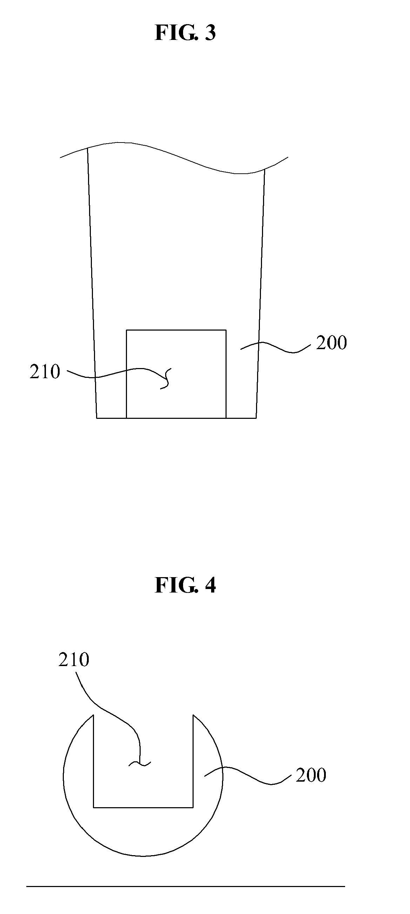

FIGS. 2 to 4 illustrate a shape of the recess 210. FIG. 2 is a diagram illustrating the recess 210 of the post receiving portion 200 of the dental ultrasonic tip 1. FIGS. 3 to 6 illustrate a shape of the recess 210 in further detail.

The shape of the recess 210 is not specifically defined. However, according to an exemplary embodiment, the recess 210 may have a flattened-U-shape cross section with one open side. That is, when seen in a direction B of FIG. 2, the recess 210 may be in the flattened-U-shape as in FIG. 4. Therefore, the dental ultrasonic tip 1 may access a lateral side of the post so that the post is easily inserted in the recess 210.

In the present embodiment, the recess 210 seen in a direction A of FIG. 2 has a rectangular shape as shown in FIG. 3. However, not limited to this, although not shown, the recess 210 may be gradually tapered in a direction into the recess 210.

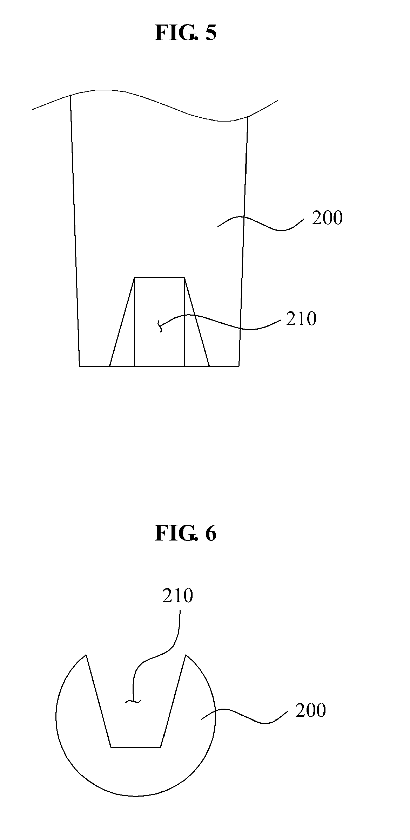

According to the exemplary embodiment, the recess 210 may be tapered in a width direction. That is, when seen in the direction B of FIG. 2, the recess 210 may have a tapered shape with a side opened as shown in FIG. 6. Such a shape may facilitate contact between the outer surface of the post and the inner surface of the recess 210 when the post in various sizes is to contact the dental ultrasonic tip 1. Furthermore, since the post does not contact the inner surface of the recess 210 with only one side but contacts the inner surface in a state of being surrounded by the recess 210, the post may be transmitted with ultrasonic energy in various directions. Accordingly, the dental ultrasonic tip 1 may continuously transmit the ultrasonic energy to the post.

According to the foregoing embodiment, the recess 210 seen in the direction A of FIG. 2 may be gradually tapered in the depth direction of the recess 210 as shown in FIG. 5. However, as shown in FIG. 3, the recess 210 may have a rectangular shape.

That is, the recess 210 may have the rectangular shape when seen in both directions A and B of FIG. 2. Also, when seen in at least one of the direction A and the direction B, the recess 210 may have the tapered shape.

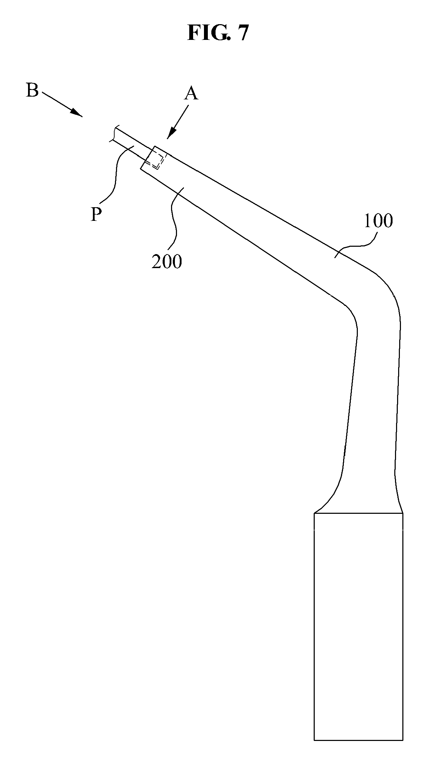

Hereinafter, the operation of the dental ultrasonic tip 1 for removing a post according to the embodiment of the present invention will be described with reference to FIGS. 7 to 9.

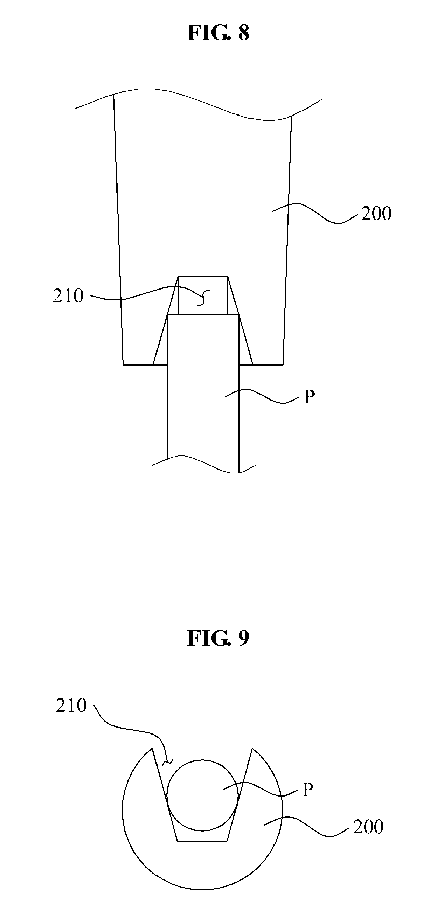

FIG. 7 is a diagram schematically showing the dental ultrasonic tip 1, being in contact with a post P. FIGS. 8 and 9 are diagrams illustrating the post received in the recess 210 in contact with the recess 210.

The post P is mounted in a space formed in the root canal so as to maintain a core and protect remaining dental tissue after a root canal treatment. The post P being mounted is not shown. The post P is fixedly bonded in the root canal using cement.

To remove the post P, the dental ultrasonic tip 1 is brought into contact with a protruded side of the post P fixed in the root canal. Therefore, the post P is inserted in the recess 210, coming into contact with the inner surface of the recess 210.

That is, the post P may be inserted in the recess 210 as shown in FIG. 8 when seen in a direction A of FIG. 7. Here, the recess 210 is tapered in the depth direction. However, as aforementioned, the shape of the recess 210 is not limited.

In addition, the post P may be inserted in the recess 210 as shown in FIG. 9 when seen in a direction B of FIG. 7. Here, the recess 210 is tapered in the width direction. However, as aforementioned, the shape of the recess 210 is not limited.

Since the recess 210 is tapered in both depth direction and width direction, the post P may be easily inserted in the recess 210 from a lateral side of the post receiving portion 200. Moreover, even when size of the post P slightly changes, the post P may come into contact with the inner surface of the recess 210 by being inserted by a predetermined depth. In addition the recess 210 contacts the post P by surrounding the post P.

When the post P is inserted in the recess 210 in a contacting manner, the dental ultrasonic tip 1 is operated to transmit ultrasonic vibration energy to the post P. For this, a conventional dental ultrasonic tip having a ball-shape leading end discontinuously contacts the outer surface of the post P by rotating by 360°, thereby evenly transmitting the energy to the post P. However, in the dental ultrasonic tip 1 according to the embodiment of the present invention, the post P is inserted in and surrounded by the recess 210 in a contacting manner. Therefore, the energy may be continuously transmitted while a contact between the dental ultrasonic tip 1 and the post P is maintained. That is, the energy may be transmitted in various directions while the contact is maintained. Accordingly, energy transmission to the post P may be efficiently performed.

When the energy is continuously transmitted to the post P and cement supporting the post P is broken, the post P may be removed from the root canal.

Although a few exemplary embodiments of the present invention have been shown and described, the present invention is not limited to the described exemplary embodiments. Instead, it would be appreciated by those skilled in the art that changes may be made to these exemplary embodiments without departing from the principles and spirit of the invention, the scope of which is defined by the claims and their equivalents.

## Claims

1. A dental ultrasonic tip for removing a post, comprising:
a tip body portion; and
a post receiving portion integrally formed with a leading end of the tip body portion and configured to include a recess depressed into a predetermined space shape,
wherein, when a post mounted in a root canal is to be removed, the post is inserted in the recess while coming into contact with an inner surface of the recess.

2. The dental ultrasonic tip of claim 1, wherein the recess is tapered in a depth direction of the recess.

3. The dental ultrasonic tip of claim 1, wherein the recess has a flattened-U-shape cross section with one open side.

4. The dental ultrasonic tip of claim 1, wherein the recess is tapered in a width direction of the recess.
